(19)

Europäisches
Patentamt
European
Patent Office
Office européen
des brevets

(11) **EP 2 608 445 A1**

(12) **EUROPEAN PATENT APPLICATION**

(43) Date of publication:
**26.06.2013 Bulletin 2013/26**

(51) Int Cl.:
*H04L 9/06* (2006.01)  *H04L 9/30* (2006.01)
*G06F 7/72* (2006.01)  *G06F 21/00* (2013.01)

(21) Application number: **11306706.0**

(22) Date of filing: **20.12.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Gemalto SA
92190 Meudon (FR)**

(72) Inventor: **Chartier, Mathieu
92190 MEUDON (FR)**

(54) **Method to protect a binary GCD computation against SPA attacks**

(57) The present invention relates to a method to protect a binary GCD computation against SPA attacks. Particularly the present invention protects embedded RSA key generations against power attacks after they are deployed (key generation triggered by the end user). For that, the present invention provides a method for protecting a binary GCD computation based on a data randomisation technique that will protect the end user's secret data against power attacks.

EP 2 608 445 A1

**Description**

*Field of the Invention*

The present invention relates to a method to protect a binary GCD computation against SPA attacks.
Particularly, the present invention relates to a method to protect the step of checking whether c-1 and e are coprime during an RSA key generation, when GCD is used as means to make this checking.

*Description of the Prior Art*

Modular exponentiation is one of the core calculations for various cryptographic algorithms. One example of a widespread cryptographic algorithm is the RSA cryptosystem.
Let N=p·q be the product of two large input primes p and q. Let also a public exponent e be coprime to $\varphi(N)=(p-1)(q-1)$, wherein $\varphi(.)$ denotes Euler's totient function. Thereby the totient $\varphi(.)$ of a positive integer n is defined to be the number of positive integers less than or equal to n that are coprime to n. A corresponding secret exponent to the public exponent e is $d=e^{-1} \mod \varphi(N)$.
In the context of RSA key generation, the GCD algorithm may be used as a means to check whether c-1 and e are coprime, where c is a candidate for primality (usually $c > 2^{512}$), and e is the RSA public exponent, usually a small prime number. This condition is necessary for the private exponent d to exist.
Unfortunately, at each step of the binary GCD algorithm we can distinguish between a shift and a subtraction through side-channel observation. This disadvantage is caused by the operation mode of the binary GCD algorithm that works according to the below example:

Input: two integers a and b
Output: the greatest common divisor of a and b

1. t←1
2. While a and b are both even

a ← a/2, b←b/2, t←2.t

3. While a > 0

(a) While a is even: a← a/2
(b) While b is even: b←b/2
(c) If a ≥ b then a←a - b

else b←b -a

4. return b.t

The algorithm works thanks to the following properties:

1. If a and b are both even, gcd(a; b) = 2. gcd(a/2, b/2 ).
2. If a is even and b is odd, then gcd(a; b) = gcd( a/2 ; b) because 2 is not a common divisor.
3. If a and b are both odd and a ≥b, then gcd(a; b) = gcd(( a-b/)2, b).
4. gcd(a; 0) = 0, because everything divides zero, and a is the largest number that divides a.

Now if we apply the binary GCD algorithm to such inputs, with a = c - 1 and b = e, we see that most of the time is spent shifting a until it is odd, then subtracting b from a to make a even again, and so on, until a = 0.
When c - 1 and e are not coprime, which is likely to happen several times in the early stages of the key generation (especially if e is very small), and e is prime, at the end of the algorithm, we have a = 0 and b = gcd(c - 1; e) = e.
At each step of the algorithm, a will be shifted by $\sigma_i$ bits until we reach an odd number $\omega_i$, from which we will subtract b (= e) to make it even again.
This can be summarised as the following set of equations:

$$\begin{cases} c - 1 = 2^{\sigma_0} \omega_0 \\ \omega_0 - e = 2^{\sigma_1} \omega_1 \\ \omega_1 - e = 2^{\sigma_2} \omega_2 \\ \vdots \\ \omega_{k-1} - e = 2^{\sigma_k} \omega_k \\ \omega_k - e = 0 \end{cases}$$

from which it is rather easy to deduce that c can be written as a function of e and $\sigma_i$; i = 0,.....,k, because $\omega_i$ can be eliminated in each equation thanks to the next one.
Since e is known and that the $\sigma_i$ can be observed through side-channel leakage (each $\sigma_i$ is the number of shifts between two subtractions), applying the binary GCD algorithm to c - 1 and e will reveal c in its entirety; this will compromise the RSA implementation, as the sequence of candidates is usually deterministic and ends with p, one of the secret factors of the RSA modulus.
In view of the foregoing, a system and method for protecting a binary GCD computation against SPA attacks would be desirable. Such system and method should be relatively easy to implement and use and require a minimal investment of resources.

*Brief summary of the invention*

The following presents a simplified summary in order to provide a basic understanding of some aspects of the disclosed embodiments. This summary is not an extensive overview and is intended to neither identify key or critical elements nor delineate the scope of such embodiments. Its purpose is to present some concepts in a simplified form as a prelude to the more detailed description that is presented later.

For a long time embedded RSA key generations featured no countermeasures against power attacks, but certification authorities have started to require these countermeasures more and more for new products. The invention provides a quick and efficient way to make a GCD computation (one of the building blocks of the key generation) resistant against SPA.

The present invention provides a method for protecting a binary GCD computation based on a data randomisation technique that will protect the end user's secret data against power attacks.

The present invention protects also embedded RSA key generations against power attacks after they are deployed (key generation triggered by the end user). For that the method proposed by the invention is particularly an SPA-resistant GCD computation.

Particularly, an object of the present invention is a method to protect a binary GCD computation against SPA attacks in the step of checking whether c-1 and e are coprime during a RSA key generation, where c is a candidate for primality and e is the RSA public exponent, c-1 and e being the original parameters of GCD, said method comprising the following steps:

- generating a mask r,
- masking at least one of the original parameters of GCD with the mask r so that GCD with the masked parameter gives the same result that GCD with the original parameter. To the accomplishment of the foregoing and related ends, one or more embodiments comprise the features hereinafter fully described and particularly pointed out in the claims.

*Detailed description of the invention*

In the following description, well known structures, devices or algorithms have not been described in detail so not to unnecessarily obscure the present invention.

It may be recalled that, in the description, when an action is attributed to a microprocessor, an application or to a device comprising a microprocessor, this action is performed by the microprocessor controlled by instruction codes recorded in a memory of this device.

In the simple power analysis (SPA), secret information is revealed by directly detecting a waveform of power consumption dependent on bit information of a secret key. To enhance resistance of the cryptography algorithm against attack by the SPA, the invention proposes a method wherein a GCD algorithm no longer produces a correlation between bit information of the secret key and the power waveform.

According to the invention, the embedded RSA key generation is secured against SPA attacks by implementing the following steps.

- generate a mask r,
- In a preferred embodiment, the whole or part of the random r is generated only once ,
- mask at least one input of the GCD with the mask r so that the result of GCD with the original inputs is equal to GCD with the masked inputs.

Then, instead of computing GCD (s, t), where s is a secret data, we compute GCD (masked s, t), which gives the same result without leaking any information about s.

In order to check that c - 1 and e are coprime, a mask r is generated where r is a random number such that r has preferably about the same length as c. At least one parameter of the GCD (either the secret c-1 or the exponent r) is masked with the generated mask r.

In the purpose to obtain the same output that GCD(c-1, e), properties of the GCD function are applied to the masked secret.

In a first embodiment, an additive masking is applied to the secret c-1. For that, it is known that gcd(a; b) = gcd(a + k .b; b). This is a property that we can use as a means to mask a parameter additively, simply by drawing k at random for each execution. If this property is applied in the context of RSA key generation, instead of computing GCD(c-1, e) in order to check that c-1 and e are coprime, it is computed GCD(c-1 +r.e, e).

Now if an attacker observes the number of shifts between each subtraction and deduces the system of equations described in the prior art section, he will reach the conclusion that, for some easily computable function f:

$$c - 1 + r.e = f(\sigma_0, \ldots\ldots, \sigma_k; e)$$
$$\updownarrow$$
$$c = f(\sigma_0; \ldots\ldots, \sigma_k; e) + 1 - r.e$$

Hence, if we choose a random number r big enough to mask c -1 entirely, the attacker will learn nothing from his observations. After experiments it has been confirmed that the number of shifts between two subtractions becomes completely random when r is big enough; when r is too small, the last $\sigma_i$ are revealed.

Indeed, r.e is as a one-time pad (OTP). Each bit or character from c-1 is masked with a bit or character from the random r.e of the same length as c-1. If r.e is as large as or greater than c-1 and never reused in whole or part, and kept secret, the output of the binary GCD computation will be almost impossible to break without knowing the random r.

In another embodiment, a multiplicative masking is applied to the public exponent e. In this case another classic property of the GCD is applied. It is known that gcd(a; gcd(b; c)) = gcd(gcd(a; b); c)

This property is used as a means to mask the secret c-1 multiplicatively, by using the following trick:

gcd(c - 1; e) = gcd(c - 1; gcd(r.e; e)) = gcd(gcd(c -1; r.e); e) where r is a random number.

Now if an attacker observes the number of shifts between each subtraction and deduces a system of equations described in the prior art section (only substituting r.e for e), he will reach the conclusion that, for some easily computable function g:

$$c = 1 + r.g(\sigma_0, \ldots\ldots, \sigma_k; e)$$

Hence, if we choose a random number r big enough to prevent exhaustive search, the attacker will learn nothing about the candidate for primality from his observations.

**Claims**

1. A method to protect a binary GCD computation against SPA attacks in the step of checking whether c-1 and e are coprime during an RSA key generation, where c is a candidate for primality and e is the RSA public exponent, c-1 and e being the original parameters of GCD, said method comprising the following steps:

   - generating a mask r,
   - masking at least one of the original parameters of GCD with the mask r so that GCD with the masked parameter gives the same result that GCD with the original parameters without leaking any information about c.

2. Method as recited in claim 1, wherein the step of masking comprises the following steps:

   - an additive masking is applied to the parameter c-1, and wherein
   - gcd(c-1 +r.e, e) equals to gcd(c-1, e) is computed.

3. Method as recited in claim 1, wherein the step of masking comprises the following steps:

   - a multiplicative masking is applied to the parameter e, and wherein
   - gcd (gcd(c-1, r.e), e) equals to GCD(c-1, e) is computed.

4. Method as recited in claims 1 to 3, wherein the length of the random r is inferior or equal to the candidate for primality c.

5. Method as recited in claims 1 to 4, wherein r.e is a one-time pad where each bit or character from c-1 is masked with a bit or character from the random r.e of the same length as c-1.

6. Method as recited in claims 1 to 5, wherein the whole or part of the random r is generated only once

Europäisches
Patentamt

European
Patent Office

Office européen
des brevets

# EUROPEAN SEARCH REPORT

**Application Number**

EP 11 30 6706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/201398 A1 (MEYER BERND [DE]) 21 August 2008 (2008-08-21) * abstract * * paragraphs [0002] - [0013], [0017] - [0036] * * figures 1,2 * | 1-6 | INV. H04L9/06 H04L9/30 G06F7/72 G06F21/00 |
| X | US 6 304 658 B1 (KOCHER PAUL C [US] ET AL) 16 October 2001 (2001-10-16) * abstract * * column 1, line 12 - column 3, line 5 * * column 10, line 28 - column 17, line 67 * * claims 7-12 * * figures 1-3 * | 1-6 | |
| X | KOCHER P C ED - KOBLITZ N (ED): "TIMING ATTACKS ON IMPLEMENTATIONS OF DIFFIE-HELLMAN, RSA, DSS, AND OTHER SYSTEMS", ADVANCES IN CRYPTOLOGY - CRYPTO '96. 16TH. ANNUAL INTERNATIONAL CRYPTOLOGY CONFERENCE. SANTA BARBARA, AUG. 18 - 22, 1996. PROCEEDINGS; [PROCEEDINGS OF THE ANNUAL INTERNATIONAL CRYPTOLOGY CONFERENCE (CRYPTO)], BERLIN, SPRINGER, DE, vol. CONF. 16, 18 August 1996 (1996-08-18) , pages 104-113, XP000626590, ISBN: 978-3-540-61512-5 * the whole document * | 1-6 | |

**TECHNICAL FIELDS SEARCHED (IPC)**

G06F
H04L

The present search report has been drawn up for all claims

| Place of search | Date of completion of the search | Examiner |
|---|---|---|
| Munich | 4 May 2012 | Mariggis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 11 30 6706

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2012

| Patent document cited in search report | Publication date | Patent family member(s) | Publication date |
|---|---|---|---|
| US 2008201398 A1 | 21-08-2008 | AT 449373 T | 15-12-2009 |
| | | BR PI0611402 A2 | 08-09-2010 |
| | | CN 101180606 A | 14-05-2008 |
| | | DE 102005024609 A1 | 30-11-2006 |
| | | EP 1891512 A1 | 27-02-2008 |
| | | JP 2008542802 A | 27-11-2008 |
| | | US 2008201398 A1 | 21-08-2008 |
| | | WO 2006125754 A1 | 30-11-2006 |
| US 6304658 B1 | 16-10-2001 | US 6304658 B1 | 16-10-2001 |
| | | US 2001002486 A1 | 31-05-2001 |

EPO FORM P0459

For more details about this annex : see Official Journal of the European Patent Office, No. 12/82